# EUROPEAN PATENT SPECIFICATION

(11) **EP 1 504 883 B1**
(45) Date of publication and mention of the grant of the patent: **27.02.2008**
(21) Application number: 04103690.6
(22) Date of filing: 30.07.2004
(51) Int. Cl.: B29D 30/24, B29D 30/20

(54) **High crown first stage tire building drum**
Eine einen hohen Scheitel aufweisende Aufbautrommel zur Herstellung einer erststufigen Karkasse
Tambour à grande élévation de la couronne pour la confection de carcasses premier temps.

(30) Priority: 04.08.2003 US 633944
(43) Date of publication of application: 09.02.2005
(73) Proprietor: THE GOODYEAR TIRE & RUBBER COMPANY, Akron, OH 44316-0001 (US)
(72) Inventor: Roedseth, John Kolbjoern, 7790 Bissen (LU); Royer, Thierry, 6700 Frassem (BE)
(74) Representative: Kutsch, Bernd

(56) References cited:
- DE-A1- 2 511 160
- GB-A- 1 436 005
- US-A- 3 833 444
- US-A- 3 833 445
- US-A- 4 087 306
- US-B1- 6 318 434
- US-B1- 6 457 505
- US-B1- 6 506 274

## Description

### Field of the Invention

The invention relates to a method of building a tire carcass and to a tire building drum, more particularly a building drum having a high central crown.

### Background of the Invention

The manufacture of tires involves numerous components and requires applying these tire components in a somewhat ordered sequence to form an assembly of components known as a "tire carcass" to which a belt package and a rubber tread is applied to make a green tire which is then vulcanized to finish the product we commonly refer to as a "tire".

The assembly of tire components, specifically a tubeless type tire, includes a liner which forms an air impervious barrier to contain the air under pressure in the air chamber of a pneumatic tire, one or more plies reinforced by cords, a chaffer compound applied in two strips, two annular bead cores and a pair of apexes which are also generally applied in strips. The bead cores generally are applied over the chaffers. Other components such as sidewall strips, run-flat inserts, shoulder gum strips, and fabric toe guards can also be applied to form the tire carcass.

This stage of the tire building process is commonly referred to as the "first stage" of the tire building process. The components are applied over a cylindrical building drum that usually includes turn-up bladders and a center bladder to convert the subassembly of tire components from a cylindrical shape to a toroidal shape.

All or almost all the rubber components are usually applied to the building drum in strips. Each strip is wound onto the drum generally requiring a 360° revolution, the ends of the strip are then spliced together.

To make the assembly process more efficient, it is desirable to preassemble many of these tire component strips. In US-A- 5,762,740 a method of laminating several of the components into a subassembly of carcass components is taught. This preassembly of strips greatly improves the efficiency of the first stage building process.

The bead and apex have also been combined in a subassembly as is taught in US-A- 4,933,034. The apex is applied in a strip outwardly extending from the radially outer or peripheral surface of the annular bead core and then stitched at the ends of the strip. These components, once preassembled, must be stored in such a way that the apex is not damaged when it is subsequently brought to the first stage tire building machine.

Such prior art subassemblies of an apex strip to a bead core have the apex radially extending in a manner that requires the carcass to be inflated in the central region to bring the apex into contact with the carcass. After the carcass is inflated, a turn-up of the ply ends and the sidewall rubber is made in a step commonly referred to as the "inflated turn-up". This sequencing of forming the carcass requires a more complex method of manufacturing the carcass because the components and subassemblies are not applied to the tire building drum in a flat fully supported state.

Tire shaping drums, such as the drum shown in US-A- 5,405,484 have been utilized for shaping tire components, however, no provision has been made for shaping the uncured components to the cured tire shape. One of the reasons for not fully shaping the tire has been the limited force available for pushing the beads toward the cured tire positions. Also, no provision has been made for retaining the beads in the pocket assemblies of the drum if the tire were to be shaped to the cured shape. Also, the bladder hinge points are not secured to prevent pulling the plies under the tire bead.

An object of the present invention is to avoid or eliminate the storage problems found in making a bead-apex subassembly.

Another object of the invention is to permit the carcass to be built with a bead-apex subassembly without requiring an inflated turn-up.

Another object of the invention is to build the bead apex subassembly at, but not on the first stage building drum, as the carcass is being constructed.

US- 3,833,444 discloses a tire building drum according to the preamble of claim 8 and to method of building a tire carcass using that tire building drum. A similar tire building drum and method of building a tire carcass is disclosed in US-A- 3,833,445.

US-B1- 6,318,434 describes a tire building drum with a turn-up apparatus. The drum has on both sides outside of ring segments a first and second set of axially extending, hingeable arms each having an end directed to the ring segment, wherein said end has a roller and means to axially and radially move each set of arms from a first position in which the rollers of a set of arms form a virtually closed ring to a second position in order to press the expanded part of the tire components which is situated between the ring segments to the part of the tire components which is situated outside the ring segments.

A further tire building drum is disclosed in US-B1-6,457,505, wherein ramp elements are used for the axial movement of the central segments and the bead lock shoes of the drum.

### Summary of the Invention

The invention relates to a method of building a tire carcass according to claim 1, and a tire building drum according to claim 8. The method may also include further inflating the carcass to toroidally shape the carcass.

The step of moving the carcass radially outwardly between the bead locks preferably includes moving the central support segments a distance D, D being at least 30 mm. Each of the bead locks preferably moves a distance axially inwardly equal to the radial movement of the central support segments. The method is best performed using a tire building drum according to claim 8.

### Definitions

"Apex" means an elastomeric filler located radially above the bead and interposed between the plies and the ply turn-up.

"Axial" and "axially" means the lines or directions that are parallel to the axis of rotation of the tire.

"Belt Structure" or "Reinforcing Belts" means at least two annular layers or plies of parallel cords, woven or unwoven, underlying the tread, unanchored to the bead.

"Carcass" means an unvulcanized laminate of tire ply material and other tire components cut to length suitable for splicing, or already spliced, into a cylindrical or toroidal shape. Additional components may be added to the carcass prior to its being vulcanized to create the molded tire.

"Casing means the tire carcass and associated tire components excluding the tread.

"Chafers" refers to narrow strips of material placed around the outside of the bead to protect cord plies from the rim, distribute flexing above the rim, and to seal the tire.

"Circumferential" means lines or directions extending along the perimeter of the surface of the annular tread perpendicular to the axial direction.

"Equatorial Plane (EP)" means the plane perpendicular to the tire's axis of rotation and passing through the center of its tread.

"Innerliner" means the layer or layers of elastomer or other material that form the inside surface of a tubeless tire and that contain the inflating fluid within the tire.

"Insert" means an elastomeric member used as a stiffening member usually located in the sidewall region of the tire.

"Ply" means a continuous layer of rubber-coated parallel cords.

"Radial" and "radially" mean directions radially toward or away from the axis of rotation of the tire.

"Tread Width" means the arc length of the tread surface in the axial direction, that is, in a plane parallel to the axis of rotation of the tire.

### Brief Description of the Drawings

The invention will be described by way of example and with reference to the accompanying drawings in which:
Figure 1 is a cross-sectional view of a first stage building drum in the radially contracted position;
Figure 2 is a cross-sectional view of the building drum in the radially expanded position;
Figure 3 is a cross-sectional view of the building drum in the expanded high crown condition with the turnup ends shown in the folded over condition;
Figure 4 is a cross-sectional view of the carcass showing the sidewalls overlapping the turnup ends of the carcass and being stitched to the carcass;
Figure 4A is an enlarged view of a portion of the building drum of Figure 4;
Figure 5 is the carcass being toroidally shaped on the building drum;
Figure 6 is the toroidally shaped carcass shown in cross section.

### Detailed Description of the Invention

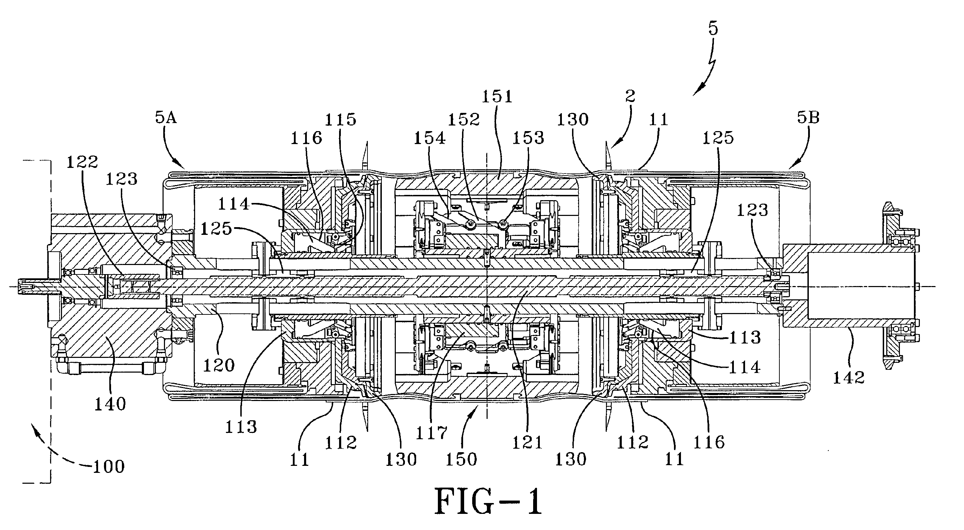

With reference to Figures 1 through 5, a cross-sectional view of an exemplary tire building drum 5 is illustrated. The building drum 5 has an axis of rotation permitting the drum to rotate. Preferably, the drum 5 is cantilevered or attached to a frame 100 (partially shown schematically by dashed lines) at one end leaving the opposite end free or alternatively supported with a movable support at one end which can be retracted to have annular components such as a bead core 12 pass over the drum 5. The drum 5 has an inflatable pair of turnup bladders 5A, 5B which are used to inflate and, thereby, make the turn-up ends of the ply wrap about the apex 30 and bead cores 12. The frame 100 can be fixed in position or movable.

At one or both sides of the frame 100 are various mechanisms for supplying strips of elastomeric components used to make a tire carcass 10. These mechanisms are often called "let-off devices" which feed strips of tire material to the building drum 5.

In close proximity to the building drum 5 a mechanism called an "automatic bead loader" (not illustrated) can be employed. The bead loader has a pair of annular members that can be formed by two semi-circular half rings. The pair of bead loaders can be pivotally moveable away from and into axial alignment with the tire building drum. The bead loaders are modified to be an integral part of a bead apex subassembly transfer mechanism.

The pair of bead loaders move axially relative to each other. This feature enables the bead loaders to move axially inwardly over the building drum 5 when in a contracted condition.

The tire building can be fully automated or may require an operator to manually cut and splice the components as they are applied to the tire building drum 5.

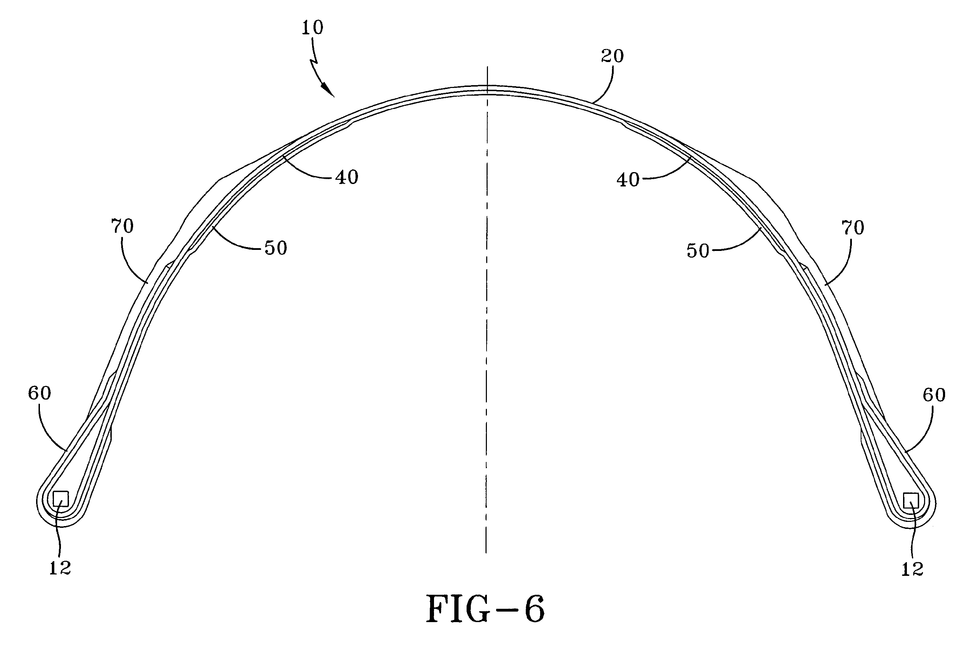

To better appreciate the tire building process, the sequence of building an exemplary tire is explained below. The components listed below can be varied for a particular tire construction. Some tires have more components than others. For example, some tires of the tube type may not require a liner 50. It is, therefore, understood that the exemplary tire construction as illustrated toroidally in Figure 6 is simply to be representative of a typical tire carcass.

A tire liner 50 is first applied to the tire building drum 5. Then, two shoulder gum strips 40 may be placed onto the liner at spaced locations axially inward of the edges of the liner 50. The shoulder gum strips 40 acts as a rubber reinforcement in the shoulder of the tire carcass.

A hard rubber chafer component 60 is then applied at each of the edges of liner 50. The chafer 60 is positioned axially to provide a tough rubber reinforcement between the tire and the rim flange of the wheel and is accordingly located in the bead region of the finished tire.

A sidewall component 70 can be attached to and slightly overlapping each of the chafers 60.

Optionally, to build an outlined white letter tire or a whitewall tire, a whitewall strip and a cover strip may be added to the sidewall areas 70 of the assembly 10. Additionally, run-flat inserts may be added in the sidewall region of the assembly. This is particularly useful in run-flat tire construction.

The above description includes most of the unreinforced elastomeric components required to build a tubeless tire carcass 10.

Overlying some of these or portions of these components prior to the lateral ends being folded over may be one or more plies 20.

Each of the components described above requires, if applied separately, a rotation of the building drum 5 to form the component into a cylindrical shape. Alternatively, these components may be fed to the tire building drum 5 as one or more subassemblies. In either case, the ends of the components or subassemblies must be spliced together.

The prior art method of tire assembly would next require that the bead cores 12 be slid over an end of the building drum 5 and positioned axially at a predetermined axial location generally above or slightly inward of the chafers 60 but over the toe guard strip if used. Then, an apex filler strip 30 would be placed with an end onto bead core 12 and extending axially inwardly relative to the bead cores 12. The apex filler strips 30 would then be cut to length and the cut ends 30A, 30B spliced together and then stitched onto the underlying bead core 20 and tire assembly. The application of the apex filler strip 30 required additional rotation of the building drum 5 and because the tire carcass is assembled in layers, each layer of strips must be accomplished sequentially.

The use of preassembled bead-apex subassemblies 2 can eliminate the time needed to rotate the drum 5. However, the need to store and maintain such subassemblies can be added cost in itself.

The present invention preferably has the forming of the bead-apex subassembly 2 at or in proximity to the tire building yet not on the building drum 5. This enables the subassemblies 2 to be formed without affecting or being limited to the building sequence of the rest of the carcass 10.

This means that the elastomeric apex strips 30 can be applied to the bead core 12 as a subassembly. The apex strip 30 is applied onto a radially outer surface 12A of a bead core 12. In the preferred embodiment, the apex strip 30 is applied vertically relative to the width (W) of the strip 30. Once applied, the longitudinal ends of the strip 30 are cut to length and spliced, preferably the strips 30 can be precut to length prior to being applied to the bead core 12. Then a pair of stitcher wheels presses firmly against the uncured apex strip 30 attaching it to the bead core 12. As illustrated, each apex strip 30 extends vertically outwardly from each bead core 12 as shown in Figure 1.

The bead-apex subassembly 2 is then pivoted into axially alignment with the axis of the tire building drum 5. Similarly, the bead loaders are positioned into axial alignment with the tire building drum 5. Once aligned, the bead loaders move axially inwardly over the bead core 12. At this point, the bead loaders, which preferably include a magnetic ring, pick up the bead apex subassembly 2 automatically. Alternatively, the bead loaders may use a vacuum or other means to grasp the bead-apex subassembly 2. Once grasped, the bead loaders each holding a bead-apex subassembly 2 can move axially to move over an end of the building drum 5 to position the bead-apex subassemblies 2 precisely onto the cylindrically-shaped carcass 10 at the location needed to position the bead apex subassembly 2. The bead loader then releases the bead apex subassembly 2 on the drum 5 while the drum bead locks 112 expand radially under the bead cores 12 locking them into position. Once the bead-apex subassembly 2 is transferred to the building drum 5, the bead loaders are moved back away from the building drum 5.

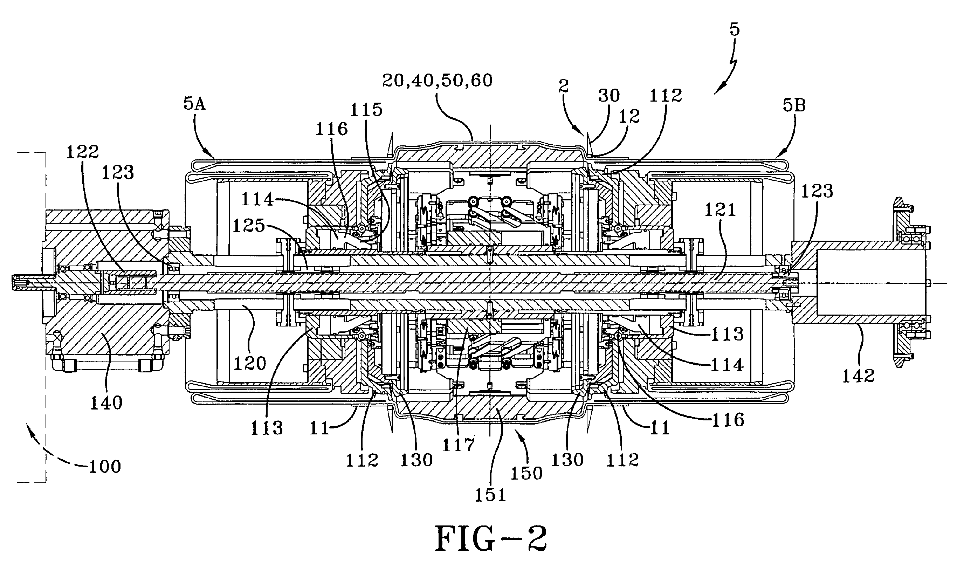

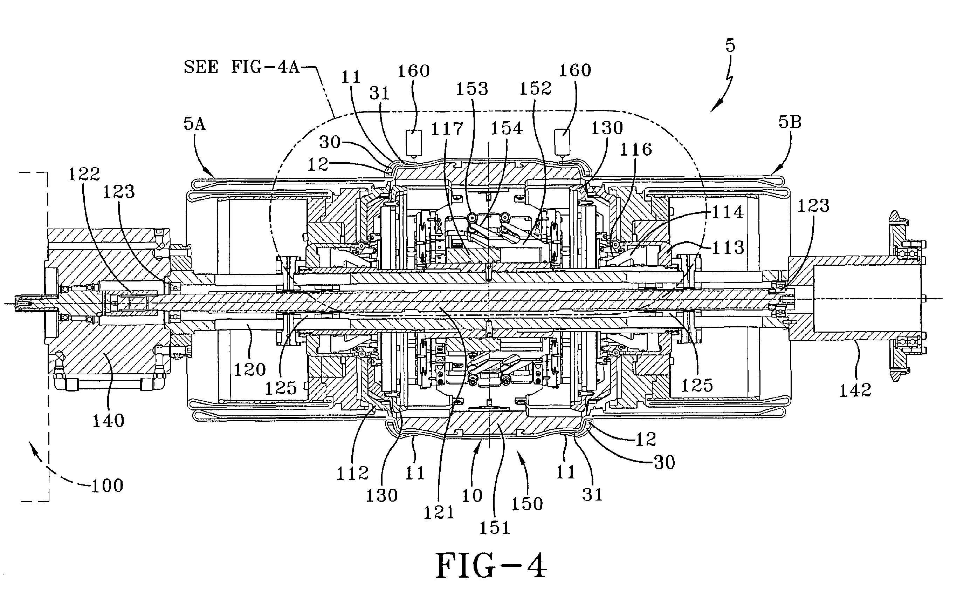

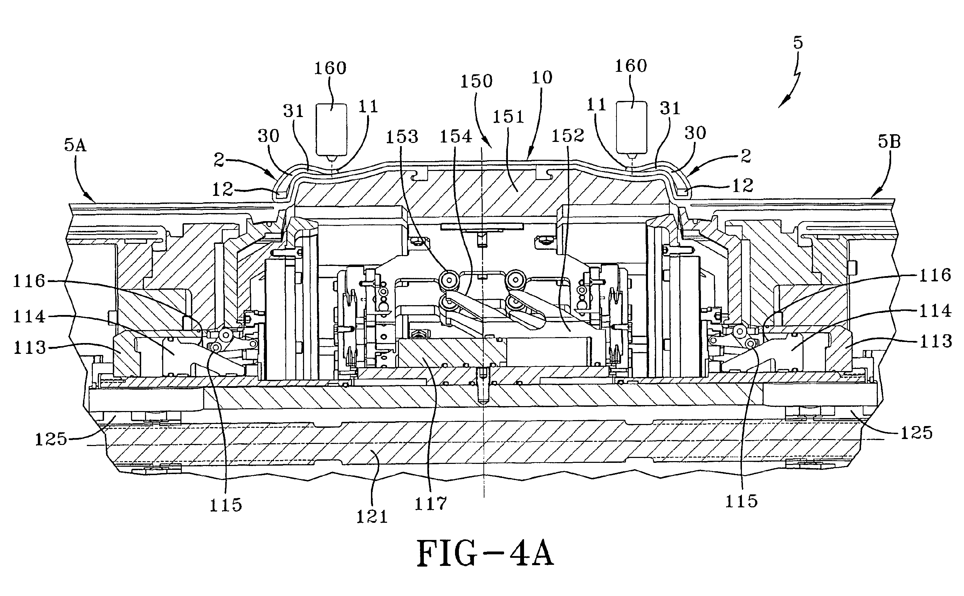

This method for building a tire carcass 10 as described has the bead locks 112 in a retracted position and axially spaced furthest apart yet when the building drum is in this contracted position as shown in Figure 1. An enlarged view of the building drum 5 can be seen in Figure 4A to facilitate the various features described below. A central drive shaft 120 provides for rotational movement of the building drum 5. The central shaft 120 provides for rotational movement of the building drum 5. The central shaft 120 is connected to a drive means 140. There is a drive end 122 connected to the drive means 140 and a free floating end 142. The central drive shaft 120 is provided with central screw 121. The central screw 121 is supported at each end by bearings 123. The threads on one side of the central screw 121 are left handed and on the opposite side are right handed. On the left hand side is an inboard ball nut or acme nut 125 connected to the one end of the threaded screw 121 and similarly on the opposite right hand side is an outboard ball nut or acme nut 125 connected to the central screw 121 and as shown the bead lock mechanism 120 includes an acme nut 125 threadedly engaged to the central screw 121 so that when the shaft turns, the bead lock mechanism 112 can move axially inward. Since each bead lock mechanism 112 on each side of the building drum 5 is attached to the same screw 121 having the same pitch and oppositely oriented threads, the axial inward movement of the beads 12 is equal. The bead locks 112 engage the bead core 12 when a pneumatic cylinder 113 is being actuated. As the pneumatic cylinder 113 is actuated, a cone mechanism 114 moves inwardly and the bead lock mechanism 112 has a plurality of cam followers 115 that rides the surface 116 of the cone 114 to provide radially outward movement. As the central screw 121 turns, the bead lock mechanisms 112 move axially inwardly. Adjacent to and directly inward of the bead lock mechanism 112 is an annular gap supporting ring 130. This annular gap supporting ring 130 provides radial support to the tire carcass 10 between a central segment support mechanism 150 and the bead lock mechanism 112. The gap supporting ring 130 is pushed axially inwardly as the bead lock mechanism 112 moves axially inwardly from both sides towards the center of the building drum 5. The central support segments 151 underlying the inflatable turnup bladders 5A, 5B of the building drum 5 must be radially expanded as the bead lock mechanism 112 moves axially inwardly. This is accomplished by actuating a pneumatic cylinder 117. The pneumatic cylinder 117 moves a cone shaped mechanism 152 having cam surfaces 154. Each of the radially supported central segments 151 has cam followers 153 that ride up along these cam surfaces 154. As the pneumatic cylinder 117 is actuated, these cam followers 153 ride along the cam surfaces 154 until they reach a fully open position at which point they are on a top portion of the cam surface 154 as shown in Figure 2. When this occurs the central support segments 151 are radially expanded such that the annular support ring 130 can pass directly under the central support segments 151. This enables the bead lock mechanism 112 to pull directly the bead core 12 and apex 30 subassemblies into contact with a radially expanded portion of the carcass 10 while the central portion of the carcass is lying on the protruding central segments.

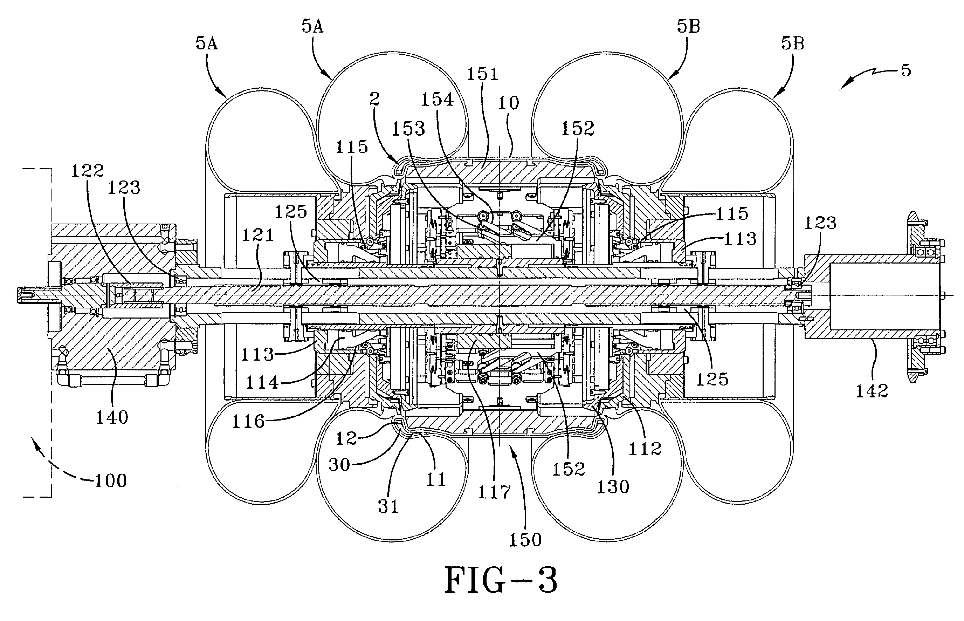

Once this is accomplished, as shown in Fig. 3, the turnup ends 11 can be folded over by actuating the inflatable turnup bladders 5A, 5B at each inboard and outboard end of the building drum 5. The turnup bladders 5A, 5B roll the carcass ply turnups 11 and the sidewalls 70 if they have been previously attached over onto the central support segments 151 and carcass ply 20. As noted, the protruding central support segments 151 extend approximately 30 millimeters above the initial contracted building condition. This permits the triangular shaped apex 30 to be folded over at the tip or radial extremes 31, however, maintaining its vertical position or almost vertical position relative to the thickest or base portions of the apex nearest the bead cores 12. This greatly facilitates the construction of the carcass ply 20 and ensures that the apexes 30 are not overly distorted during the building process as is commonly done in the prior art method of assembling tire carcasses 10.

Once the tire turnup ends 11 are folded over as shown in Fig. 3, the sidewalls 70 can then either be applied or if previously applied the entire assembly can then be stitched using roller mechanisms 160 as illustrated in Fig. 4. The stitching procedure ensures that entrapped air is pushed outwardly of the carcass 10 and that the components are firmly adhered to the adjacent underlying tire carcass components.

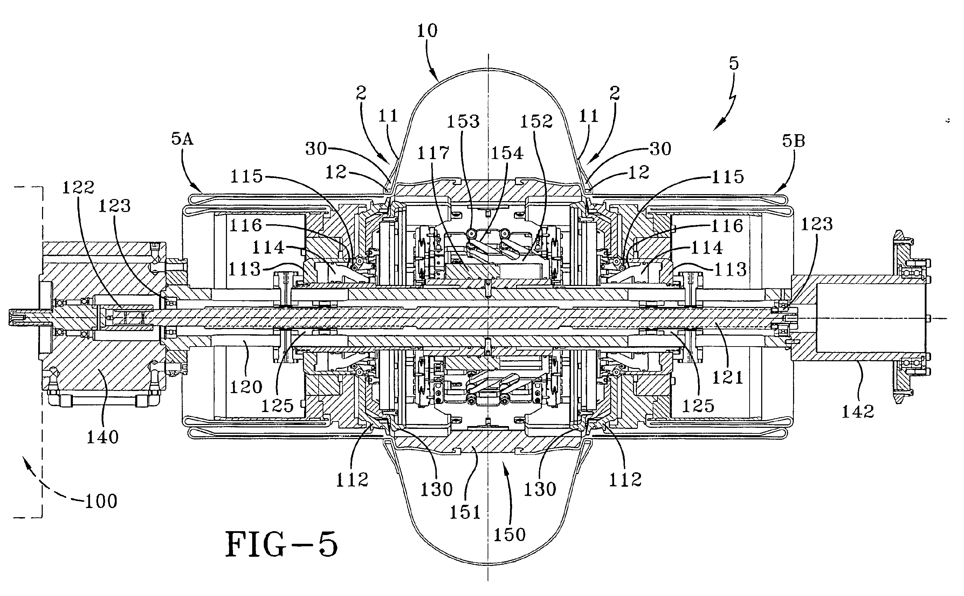

Once the stitching has been accomplished, the building drum 5 between the beads is charged with air or other fluid medium which passes through the central segment support mechanism 150 and the radially expanded central support segments 151 to toroidally shape the tire carcass 10 as illustrated in Figure 5. When this is accomplished, the radially outer tip 31 of the apex strip 30 is moved back to its almost vertical position and the tire has been built in such a fashion that the carcass 10, particularly at the bead core area is not overly stressed. This method of tire carcass construction is what the inventors call a high crown building. This high crown building drum 5, using the central support segments 151, ensures that the carcass 10 has at least partially vertically extending ply portions prior to the ends 11 being turned up. This more closely assimilates the finished tire shape. Additionally, the movement radially outward of the central support segments 151 is precisely equal to the axial movement of the locked bead core 12 on each side. This ensures that the precise amount of tension is applied to the tire carcass 10 each and every time it is toroidally inflated, greatly improving the reliability of the finished product.

As shown in Figure 6, the toroidally shaped carcass 10 is then ready to either be transferred to a second stage building drum wherein the tread belt and reinforcing structure and radially outer tread can be applied to the carcass 10.

## Claims

1. A method of building a tire carcass (10) on a first stage tire building drum (5) comprising the steps of:
applying unvulcanized tire building components on the first stage tire building drum (5) to form a cylindrically shaped unvulcanized tire carcass (10) having carcass ends;
placing a pair of tire apex and bead subassemblies (2) in parallel relation around the first stage drum (5) in spaced relation from the cylindrical tire carcass (10) thereon, such that the carcass ends of the tire carcass (10) extend laterally beyond the apex and bead subassemblies (2);
locking the beads by radially expanding bead lock mechanisms forcing the carcass (10) into engagement with the beads; moving the carcass radially outwardly between the bead locks (112) by radially expanding a central segment support mechanism including a plurality of central support segments (151) that are partially covered by an inflated pair of turnup bladders (5A, 5B) while moving the pair of bead locks (112) simultaneously axially inwardly, wherein each of the bead locks (112) moves a distance axially inwardly equal to the radial movement of the central support segments (151);
turning up the tire carcass ends following a radially outward extending contour at least halfway along the apex and bead subassemblies (2) to an axially inwardly extending end;
stitching the turnups to form a partially radially extending turnup.

2. The method of claim 1, further comprising inflating through the central segment support mechanism to toroidally shape the carcass.

3. The method of claim 1 or 2, wherein the step of moving the carcass (10) radially outwardly between the bead locks (112) includes moving the segments a distance (D), said distance being at least 30 mm.

4. The method of claim 1, wherein the bead lock mechanism pulls directly the tire apex and bead subassemblies (2) into contact with a radially expanded portion of the carcass (10) while a central portion of the carcass (10) is lying on the protruding central segments (151).

5. The method of claim 1, wherein once the stitching has been accomplished, the building drum (5) between the beads is charged with air or other fluid medium which passes through the central segment support mechanism and the radially expanded central support segments (151) to toroidally shape the tire carcass (10).

6. The method of claim 5, wherein when the step of claim 5 is accomplished, a radially outer tip (31) of the apex is moved back to its almost vertical position.

7. The method of claim 1, the carcass (10) has at least partially vertically extending ply portions prior to the carcass ends (11) being turned up.

8. A tire building drum (5) comprising
a pair of bead locks (112);
a pair of support rings (130), each support ring (130) being positioned between the radially expandable segments (151) and a bead lock (112) and wherein as the segments (151) expand and the bead locks (112) move axially inwardly the support rings (130) move under the segments;
a central screw (121);
a pair of inflatable turnup bladders (5A, 5B);
a radially expandable central segment support mechanism having a plurality of radially movable segments (151);
a pair of bead lock mechanisms, each bead lock mechanisms being mounted on axially movable housings connected to the central screw (121); and
means for rotating the drum (5); **characterized in that** said movable segments (151) having cam followers (115) in engagement with cam surfaces (154) of a cone mechanism (152) and the cone mechanism (152) is actuatable independently of said central screw (121) by means for providing pneumatic or fluid driven motion.

9. The tire building drum of claim 8, wherein in the drum retracted position each bead lock mechanism is spaced a distance from an end of the central segment support mechanism.

## Patentansprüche

1. Verfahren zum Bauen einer Reifenkarkasse (10) auf einer Reifenbautrommel (5) der ersten Stufe, umfassend die Schritte des :
Anbringens unvulkanisierter Reifenbaukomponenten auf der Reifenbautrommel (5) der ersten Stufe, um eine zylindrisch geformte unvulkanisierte Reifenkarkasse (10) mit Karkassenenden zu bilden ;
Auflegens eines Paars von Reifenkernprofil- und Wulst-Unterbaugruppen (2) parallel zueinander um die Trommel (5) der ersten Stufe, beabstandet von der darauf befindlichen zylindrischen Reifenkarkasse (10), sodass die Karkassenenden der Reifenkarkase (10) sich seitlich über die Kernprofil- und Wulst-Unterbaugruppen (2) hinaus erstrecken ;
Verriegelns der Wülste durch radial expandierende Wulstverriegelungsmechanismen, welche die Karkasse (10) in Eingriff mit den Wülsten zwingen ; Bewegens der Karkasse radial auswärts zwischen die Wulstriegel (112) durch radiales Expandieren eines zentralen Segmentstützmechanismus, der eine Vielzahl zentraler Stützsegmente (151) umfasst, die teilweise von einem aufgepumpten Paar Umschlagbälge (5A, 5B) bedeckt werden, während gleichzeitig das Paar Wulstriegel (112) axial einwärts bewegt wird, wobei jeder der Wulstriegel (112) sich um einen Abstand axial einwärts bewegt, der gleich der radialen Bewegung der zentralen Stützsegmente (151) ist ;
nach oben Umschlagens der Reifenkarkassenenden gemäß einer sich radial auswärts erstreckenden Kontur mindestens auf halbem Weg entlang der Kernprofil- und Wulst-Unterbaugruppen (2) zu einem sich axial einwärts erstreckenden Ende ;
Anrollens der Umschläge zur Bildung eines sich teilweise radial erstreckenden Umschlags.

2. Verfahren nach Anspruch 1, weiter das Aufpumpen durch den zentralen Segmentstützmechanismus zum kreisringförmig Formen der Karkasse umfassend.

3. Verfahren nach Anspruch 1 oder 2, wobei der Schritt des Bewegens der Karkasse (10) radial auswärts zwischen die Wulstriegel (112) das Bewegen der Segmente über einen Abstand (D) einschließt, wobei dieser Abstand mindestens 30 mm beträgt.

4. Verfahren nach Anspruch 1, wobei der Wulstriegelmechanismus die Kernprofil- und Wulst-Unterbaugruppen (2) direkt in Kontakt mit einem radial expandierten Teil der Karkasse (10) zieht, während ein zentraler Teil der Karkasse (10) auf den vorragenden zentralen Segmenten (151) aufliegt.

5. Verfahren nach Anspruch 1, wobei, sobald das Anrollen vollzogen worden ist, die Bautrommel (5) zwischen den Wülsten mit Luft oder anderem Fluidmedium befüllt wird, das durch den zentralen Segmentstützmechanismus und die radial expandierten zentralen Stützsegmente (161) passiert, um die Reifenkarkasse (10) kreisringförmig zu formen.

6. Verfahren nach Anspruch 5, wobei, wenn der Schritt von Anspruch 5 vollzogen ist, eine radial äußere Spitze (31) des Kernprofils zu ihrer nahezu vertikalen Position zurückbewegt wird.

7. Verfahren nach Anspruch 1, wobei die Karkasse (10) mindestens teilweise vertikal verlaufende Lagenteile aufweist, bevor die Karkassenenden (11) nach oben umgeschlagen werden.

8. Reifenbautrommel (5), umfassend
ein Paar Wulstriegel (112) ;
ein Paar Stützringe (130), wobei jeder Stützring (130) zwischen den radial expandierbaren Segmenten (151) und einem Wulstriegel (112) positioniert ist und wobei, wenn die Segmente (151) expandieren und die Wulstriegel (112) sich axial einwärts bewegen, die Stützringe (130) sich unter die Segmente bewegen ;
eine zentrale Spindel (121) ;
ein Paar aufblasbarer Umschlagbälge (5A, 5B) ;
einen radial expandierbaren zentralen Segmentstützmechanismus mit einer Mehrzahl radial bewegbarer Segmente (151) ;
ein Paar Wulstriegelmechanismen, wobei jeder Wulstriegelmechanismus an axial bewegbaren Gehäusen montiert ist, die mit der zentralen Spindel (121) verbunden sind ; und
Mittel zum Rotieren der Trommel ; **dadurch gekennzeichnet, dass** die bewegbaren Segmente (151) Nockenfolger (115) in Eingriff mit Nockenflächen (154) eines Kegelmechanismus (152) aufweisen und der Kegelmechanismus (152) unabhängig von der zentralen Spindel (121) durch Mittel zur Bereitstellung pneumatischer oder fluidgetriebener Bewegung betätigbar ist.

9. Reifenbautrommel nach Anspruch 8, wobei in der eingefahrenen Position der Trommel jeder Wulstriegelmechanismus um einem Abstand von einem Ende des zentralen Segmentstützmechanismus beabstandet ist.

## Revendications

1. Procédé de confection d'une carcasse de bandage pneumatique (10) sur un tambour de confection de bandage pneumatique (5) du premier stade, comprenant les étapes consistant à :
appliquer des composants non vulcanisés de confection de bandage pneumatique sur le tambour de confection de bandage pneumatique (5) du premier stade pour obtenir une carcasse de bandage pneumatique non vulcanisé (10) de configuration cylindrique, possédant des extrémités de carcasse ;
placer une paire de sous-assemblages de bourrages sur tringles et de talons de bandage pneumatique (2) dans une relation parallèle autour du tambour (5) du premier stade sur ce dernier, à l'écart de la carcasse cylindrique de bandage pneumatique (10), de telle sorte que les extrémités de la carcasse (10) du bandage pneumatique s'étendent en direction latérale au-delà des sous-assemblages de bourrages sur tringles et de talons (2) ;
verrouiller les talons en élargissant en direction radiale des mécanismes de verrouillage de talons qui forcent la carcasse (10) à venir se mettre en contact avec les talons ;
déplacer la carcasse en direction radiale vers l'extérieur entre les dispositifs de verrouillage de talons (112) en élargissant en direction radiale un mécanisme de support de segment central englobant plusieurs segments de supports centraux (151) qui sont recouverts en partie par une paire gonflée de vessies de retournement (5A, 5B), tout en déplaçant les paires de dispositifs de verrouillage de talons (112) de manière simultanée en direction axiale vers l'intérieur, chacun des dispositifs de verrouillage de talons (112) se déplaçant sur une distance, en direction axiale vers l'intérieur, égale au mouvement radial des segments de supports centraux (151) ;
retourner les extrémités de la carcasse du bandage pneumatique en suivant un contour, s'étendant en direction radiale vers l'extérieur, au moins sur la moitié de la distance le long des sous-assemblages de bourrages sur tringles et de talons (2) pour obtenir une extrémité s'étendant en direction axiale vers l'intérieur ;
piquer les retournements pour former un retournement s'étendant en partie en direction radiale.

2. Procédé selon la revendication 1, comprenant en outre un gonflage via le mécanisme de support de segment central pour conférer à la carcasse une configuration toroïdale.

3. Procédé selon la revendication 1 ou 2, dans lequel l'étape consistant à déplacer la carcasse (10) vers l'extérieur en direction radiale entre les dispositifs de verrouillage de talons (112) englobe le fait de déplacer les segments sur une distance (D), ladite distance s'élevant à au moins 30 mm.

4. Procédé selon la revendication 1, dans lequel le mécanisme de verrouillage de talons exerce directement une traction sur les sous-assemblage de bourrages sur tringles et de talons (2) du bandage pneumatique pour les amener en contact avec une portion de la carcasse (10) élargie en direction radiale, tandis que la portion centrale de la carcasse (10) vient se disposer sur les segments centraux saillants (151).

5. Procédé selon la revendication 1, dans lequel, après avoir réalisé la piqûre, le tambour de confection (5) entre les talons est chargé avec de l'air ou avec un autre milieu fluide qui passe à travers le mécanisme de support de segment central et les segments de support centraux (151) soumis à un élargissement en direction radiale pour conférer une configuration toroïdale à la carcasse (10) du bandage pneumatique.

6. Procédé selon la revendication 5, dans lequel après avoir mis en oeuvre l'étape de la revendication 5, l'extrémité externe en direction radiale (31) du bourrage sur tringle est ramenée à sa position pratiquement verticale.

7. Procédé selon la revendication 1, dans lequel la carcasse (10) possède des portions de nappes s'étendant au moins en partie en direction verticale, avant le retournement des extrémités de carcasse (11).

8. Tambour de confection de bandage pneumatique (5) comprenant :
une paire de dispositifs de verrouillage de talons (112) ;
une paire d'anneaux de support (130), chaque anneau de support (130) étant disposé entre les segments (151) aptes à s'élargir en direction radiale et un dispositif de verrouillage de talons (112), et dans lequel, lorsque les segments (151) s'élargissent et lorsque les dispositifs de verrouillage de talons (112) se déplacent vers l'intérieur en direction axiale, les anneaux de support (130) se déplacent en dessous des segments ;
une vis centrale (121) ;
une paire de vessies de retournement gonflables (5A, 5B) ;
un mécanisme de support de segment central apte à s'élargir en direction radiale, possédant plusieurs segments (151) mobiles en direction axiale ;
une paire de mécanismes de verrouillage de talons, chaque mécanisme de verrouillage de talons étant monté sur des boîtiers mobiles en direction axiale reliés à la vis centrale (121) ; et
des moyens pour faire tourner le tambour (5) ; **caractérisé en ce que** lesdits segments mobiles (151) possèdent des galets de cames (115) qui entrent en contact avec des surfaces de cames (154) d'un mécanisme en forme de cône (152) et **en ce que** le mécanisme (152) en forme de cône peut être actionné indépendamment de ladite vis centrale (121) en prévoyant un mouvement un entraînement pneumatique ou un mouvement entraîné par un fluide.

9. Tambour de confection de bandage pneumatique selon la revendication 8, dans lequel, dans la position rétractée du tambour, chaque mécanisme de verrouillage de talon est disposé à l'écart d'une extrémité du mécanisme de support de segment central.
